# FASCICULE DE BREVET EUROPEEN

(11) **EP 1 989 112 B1**
(45) Date de publication et mention de la délivrance du brevet: **04.07.2018**
(21) Numéro de dépôt: 07712219.0
(22) Date de dépôt: 14.02.2007
(51) Int. Cl.: B64G 1/22, B64G 1/62, B64G 1/00, B64G 1/24

(54) **VOILURE D'AÉROFREINAGE DE SATELLITE**
SATELLITENLUFTBREMSENFLÜGELSTRUKTUR
SATELLITE AIR BRAKE WING STRUCTURE

(30) Priorité: 27.02.2006 FR 0650661
(43) Date de publication de la demande: 12.11.2008
(73) Titulaire: ArianeGroup SAS, 75015 Paris (FR)
(72) Inventeur: PEYPOUDAT, Vincent, F-78360 Morainvilliers (FR); LE COULS, Olivier, F-33160 Saint Medard En Jalles (FR)
(74) Mandataire: Ipside
(86) Numéro de dépôt international: PCT/EP2007/051453
(87) Numéro de publication internationale: WO 2007/096289

(56) Documents cités:
- EP-A2- 1 283 168
- DE-U1- 7 726 478
- US-B1- 6 508 036
- US-B1- 6 830 222
- LYONS D T ET AL: "MARS GLOBAL SURVEYOR: AEROBRAKING MISSION OVERVIEW" JOURNAL OF SPACECRAFT AND ROCKETS, AMERICAN INSTITUTE OF AERONAUTICS AND ASTRONAUTICS,REASTON,VA, US, vol. 36, no. 3, mai 1999 (1999-05), pages 307-313, XP000827494 ISSN: 0022-4650
- LEIGH L M ET AL: "DYNAMIC CHARACTERIZATION OF AN INFLATABLE CONCENTRATOR FOR SOLAR THERMAL PROPULSION" JOURNAL OF SPACECRAFT AND ROCKETS, AMERICAN INSTITUTE OF AERONAUTICS AND ASTRONAUTICS,REASTON,VA, US, vol. 40, no. 1, janvier 2003 (2003-01), pages 24-27, XP001142719 ISSN: 0022-4650

## Description

La présente invention concerne une voilure d'aérofreinage de satellite particulièrement adapté à la désorbitation des satellites en fin de vie.

Les satellites en fin de vie encombrent l'espace proche et, du fait qu'en haute altitude la pression d'air est très réduite, ces satellites atteignant la fin de vie de leur service sont susceptibles de rester en orbite de longues années et ainsi d'encombrer l'espace et de causer des risques de collision et de destruction des autres satellites.

Pour fixer les idées un satellite d'un rapport surface projetée sur masse de l'ordre de 5 à 6 millièmes de m²/kg en orbite à une altitude de 700 Km mettra de l'ordre de 45 ans pour descendre à une altitude à laquelle il sera détruit or certaines agences spatiales imposent maintenant une durée de vie maximale de 25 ans aux satellites en orbite basse ayant rempli leur mission.

Sans moyens de désorbitation, cette durée maximale interdirait une orbite supérieure à 650 km à un satellite ayant un rapport surface projetée sur masse tel que défini précédemment.

Aussi, les exploitants de satellites s'efforcent de limiter la durée de vie des satellites après la fin de leur service en prévoyant des systèmes les déplaçant de leur orbite pour les désorbiter ou les positionner sur une orbite différente de fin de vie.

Les procédés de désorbitation sont basés sur le principe d'une rentrée dans l'atmosphère forcée du satellite en fin de vie.

Deux cas de figure se présentent en général.

Soit, selon un premier type d'orbite, le satellite est sur une orbite elliptique possédant un périgée dans les couches denses de l'atmosphère. Dans un tel cas la désorbitation se fait naturellement en quelques jours ou quelques heures.

Soit, selon un second type d'orbite, le satellite se trouve sur une orbite stable ne traversant pas les couches denses et la désorbitation naturelle prend un temps très long comme vu précédemment.

Dans le cas d'un satellite effectuant sa mission sur une orbite pour laquelle la retombée naturelle du satellite est jugée trop lointaine, la solution la plus courante pour accélérer la désorbitation du satellite est d'abaisser son orbite en lui donnant une impulsion à l'aide de propulseurs.

L'inconvénient est qu'il faut conserver une quantité de combustible, et une énergie suffisante pour permettre cette impulsion, jusqu'à une phase de vie avancée du satellite.

De plus lorsque ces propulseurs ne sont pas utiles à la mission du satellite, ils constituent un poids parasite pour la mise en orbite du satellite, ainsi qu'une masse et un volume inutile au long de la mission.

En outre, la mise en oeuvre de cette impulsion doit se faire alors que le satellite pourrait ne plus avoir qu'une capacité fonctionnelle résiduelle ce qui impose de lui conserver des facultés de manoeuvre au delà de sa durée de vie normale.

Un moyen alternatif est l'aérofreinage.

Le principe de l'aérofreinage est connu du document US 6 550 720 qui décrit des moyens permettant en particulier de modifier l'orbite d'un satellite et de transférer une charge utile depuis une orbite géostationnaire à 36000 km jusqu'à une orbite basse et qui utilise le passage de la charge dans les couches hautes de l'atmosphère afin de circulariser son orbite.

Ce principe d'aérofreinage utilisé pour modifier l'orbite d'une charge ou d'un satellite a été par ailleurs utilisé dans le cadre de la mission de la sonde "Mars global surveyor" pour circulariser l'orbite initialement très elliptique de la sonde en la faisant passer dans la partie haute de l'atmosphère martienne.

Ce principe d'aérofreinage est en outre utilisé pour des procédures de rentrée dans l'atmosphère où le freinage est beaucoup plus violent et nécessite un bouclier thermique.

L'aérofreinage est efficace aux altitudes où l'atmosphère est relativement dense et, pour l'utiliser à des altitudes plus importantes que les couches hautes de l'atmosphère, il est nécessaire d'accroître la surface de traînée du satellite afin d'utiliser l'effet de freinage, même très faible, de l'atmosphère résiduelle présente sur les orbites hautes.

Pour cela, le document US 6 550 720 décrit de réaliser des grandes voiles en forme de parapluie adaptées pour conférer une stabilité au satellite et une position particulière de ce satellite sur sa trajectoire.

De telles voiles sont difficile à mettre en oeuvre du fait du volume important qu'elles occupent repliées et de leur surface importante.

Par exemple, selon le document US 6 550 720, pour freiner un satellite de l'ordre de 600 kg à une altitude seulement de 150 km une voile de l'ordre de 150 m² est nécessaire.

D'autre part il est nécessaire de prévoir plusieurs montants ou mâts devant se déployer pour maintenir de telles voiles ouvertes.

Enfin, de telles voiles fonctionnent selon une direction privilégiée pour laquelle le satellite doit être stabilisé et, si le satellite est orienté défavorablement par rapport à la voile, ou si le satellite tourne sur lui même, leur effet est très fortement réduit.

Pour utiliser de telles voiles, il est donc nécessaire de stabiliser le satellite et donc d'utiliser ses systèmes de contrôle d'attitude ce qui ramène au problème vu précédemment de la conservation de fonctions de pilotage et de propulsion du satellite en fin de vie.

Il a été aussi envisagé d'utiliser les panneaux solaires des satellites comme surface de freinage mais cette technologie reste trop lourde, compliquée à mettre en oeuvre et souvent insuffisante.

La présente invention concerne une technologie de dispositif d'aérofreinage, applicable à la désorbitation des satellites, basée sur une voile perfectionnée en ce qu'elle reste peu volumineuse repliée, en ce qu'elle nécessite une ossature réduite et en ce qu'elle nécessite peu d'énergie pour son déploiement ce qui lui conserve un bilan de masse réduit et une fiabilité importante compatible avec son utilisation en fin de vie du satellite.

En outre, de manière particulièrement avantageuse, la voile selon l'invention est conçue en sorte de fonctionner en ralentisseur quelque soit l'attitude du satellite et en sorte de permettre d'éviter de le stabiliser ce qui évite d'accroître la masse du satellite et évite de conserver des ergols de propulsion après la fin de la mission du satellite.

Dans ce cadre, la présente invention prévoit une voilure déployable d'aérofreinage de satellite, pour laquelle la voilure une fois déployée comprend au moins un élément de voilure formant une structure tridimensionnelle comportant au moins deux panneaux s'étendant selon des plans sécants et formant un dièdre.

Cette structure tridimensionnelle a en outre comme avantage de présenter une section efficace importante quelque soit la position du satellite sur sa trajectoire ce qui permet de ne pas nécessiter de stabilisation du satellite sur cette trajectoire.

Selon l'invention, les panneaux se rejoignent selon une arête commune constituée par un mât de déploiement commun aux deux panneaux.

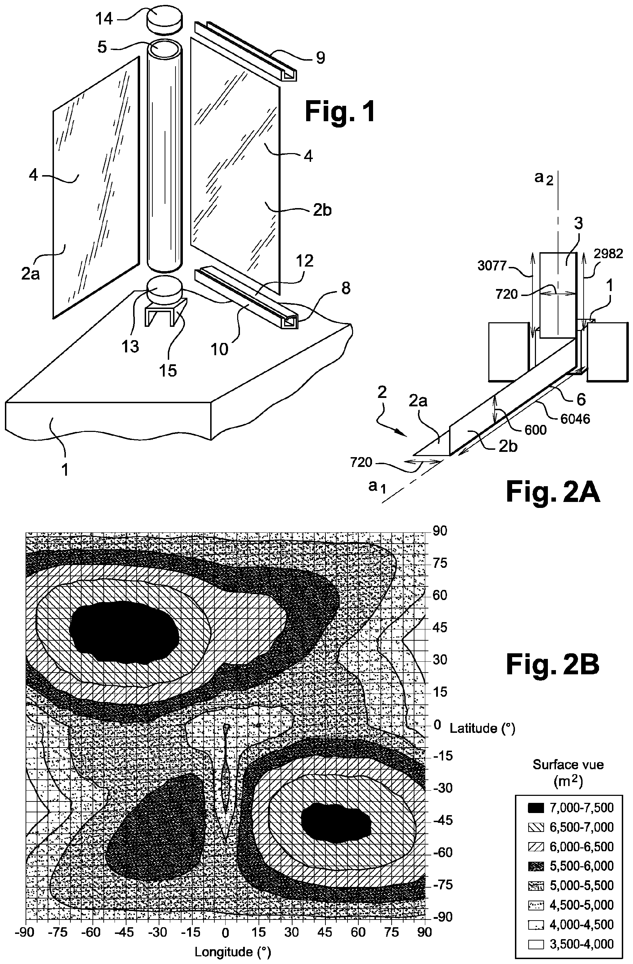

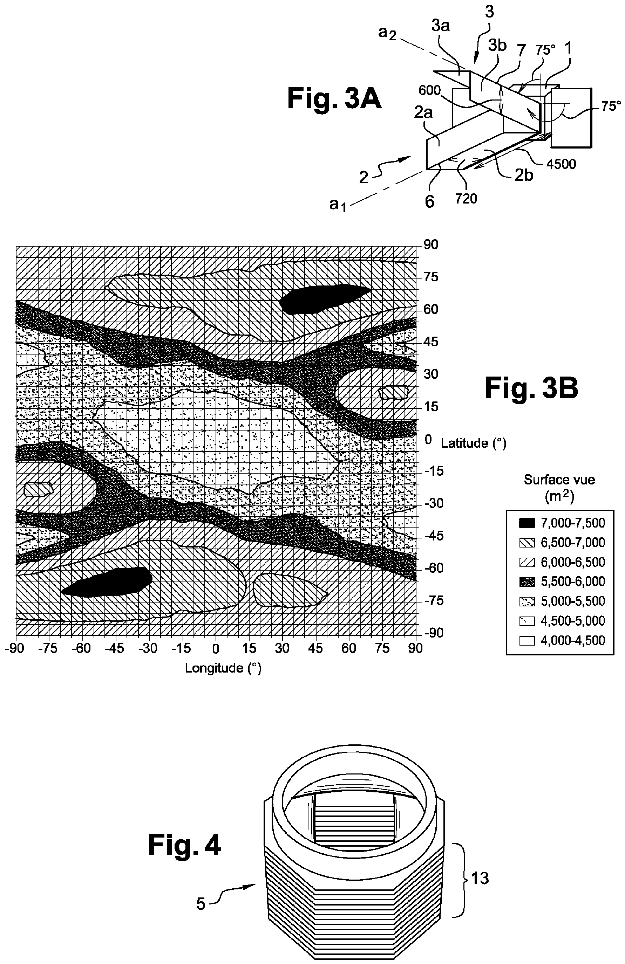

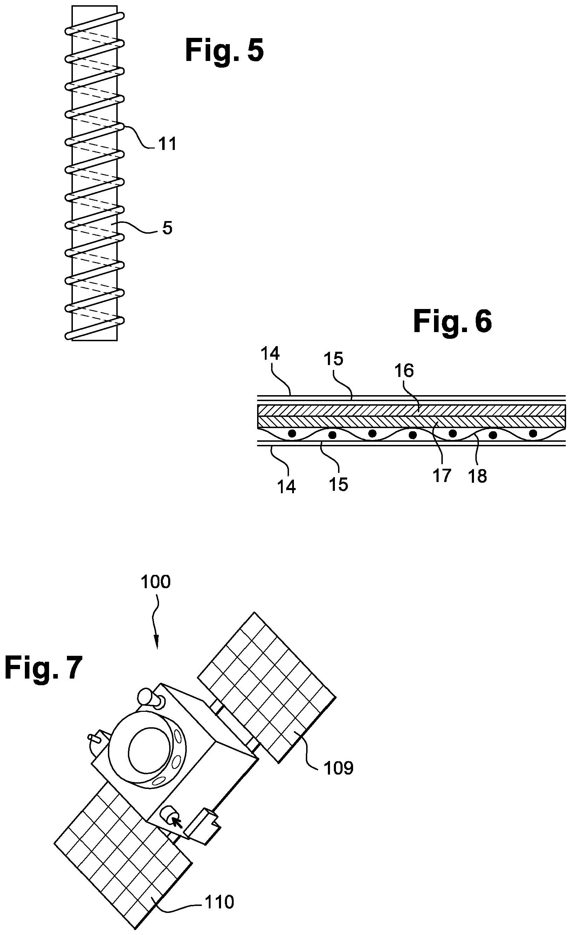

D'autres caractéristiques et avantages de l'invention seront mieux compris à la lecture de la description qui va suivre en référence aux dessins qui représentent:
en figure 1: une vue en éclaté d'un élément de voilure selon l'invention;
en figure 2A et 2B: respectivement un premier exemple de réalisation d'une voilure selon l'invention et sa section efficace;
en figure 3A et 3B: respectivement un second exemple de réalisation d'une voilure selon l'invention et sa section efficace;
en figure 4: une vue en coupe d'un mât de déploiement selon l'invention constitué par un tube en position repliée;
en figure 5: une vue schématique du mât de la figure 4 constitué par un tube déployé;
en figure 6: une vue en coupe d'une membrane de voilure selon l'invention;
en figure 7: une vue schématique en perspective d'un exemple de satellite pourvu du dispositif selon l'invention.

Le dispositif d'aérofreinage de satellite selon l'invention s'applique particulièrement à un satellite 100 tel que représenté en figure 7 de type micro-satellite pourvu de générateurs solaires 109, 110 de masse de l'ordre de 200 kg, de surface projetée moyenne de 1,5m^{2,} soit une rapport surface projetée sur masse de l'ordre du rapport donné en préambule, et placé sur une orbite située entre 650 et 800 km d'altitude.

Le dispositif d'aérofreinage de satellite 1, représenté en figure 1 comporte une voilure déployable 2, 3 qui comprend au moins un élément de voilure formant une structure tridimensionnelle.

Selon l'exemple de la figure 2A, la structure comprend un premier élément de voilure comprenant deux panneaux 2a, 2b, s'étendant selon des plans sécants et formant un dièdre, et un second élément de voilure plan.

Ces panneaux peuvent être des panneaux réalisés avec des membranes souples ou des membranes rigides une fois déployées.

Lesdits premier et second élément de voilure s'étendent selon cet exemple selon des axes a1, a2 qui sont des axes perpendiculaires.

Selon l'exemple de la figure 3A, le premier et le second éléments de voilure comprennent chacun deux panneaux 2a, 2b, 3a, 3b et sont disposés selon des axes a1, a2 obliques, le premier élément de voilure 2 étant orienté parallèlement à un premier axe a1 du satellite et le second élément de voilure 3 étant orienté parallèlement à un second axe a2 du satellite, distinct du premier.

Selon cet exemple les deux éléments de voilure comportent chacun deux panneaux 2a, 2b et 3a, 3b disposés en dièdre.

Les panneaux comportent une arête commune 6 constituée par un mât de déploiement des panneaux commun aux deux panneaux.

Selon chacun de ces deux exemples, la voilure comporte au moins deux éléments de voilure disjoints 2, 3 mais il est possible de considérer un seul ou plus de deux éléments tout en restant dans le cadre de l'invention.

Les panneaux constituant les éléments de voilure sont plus particulièrement représentés en figure 1 selon laquelle l'arête commune 6, 7 des panneaux de chaque élément de voilure est constituée par un mât 5, de déploiement de l'élément de voilure, réalisé selon l'exemple par un tube mais pouvant aussi être réalisé sous forme d'un mât télescopique tout en restant dans le cadres de l'invention.

Dans le cadre de l'invention, au moins l'un des panneaux 2, 3 est constitué d'une membrane souple 4, plane une fois déployée, et tendue sur au moins deux côtés sinon trois côtés par des éléments de maintien 5, 8, 9.

Les éléments de maintien comprennent un bras rigide 9, solidaire de la partie distale dudit tube 5 et maintenant la membrane 4 écartée du mât 5 et au moins un point d'accroche disposé à l'extrémité distale, par rapport au tube, d'un carter 10, disposé sur un côté du satellite, renfermant la membrane avant son déploiement et à partir duquel la membrane 4 se déploie.

Le tube 5 peut aussi constituer un élément de maintien complémentaire de la membrane.

Pour assurer le déploiement de la voilure, selon un mode de réalisation particulier de l'invention le mât 5 est un tube gonflable plié en accordéon avant déploiement.

De façon préférentielle, le tube 5 est constitué par un laminé et notamment par un laminé aluminium par exemple constitué par l'assemblage d'une feuille d'aluminium et de deux feuillets en matériau tel que le Kapton (marque enregistrée). Un tel laminé a pour principal avantage de ne pas requérir d'énergie autre que la pression de gonflage du tube et d'être suffisamment inerte pour bien supporter un stockage prolongé tant au sol que dans l'espace.

Le rôle du Kapton est principalement de protéger l'aluminium lors des opérations de pliage du tube.

Les feuilles de Kapton sont collées de chaque côté de la feuille d'aluminium.

Pour des raisons de possibilité de pliage, l'épaisseur de la feuille d'aluminium ne dépassera pas 100 microns, l'épaisseur des feuilles Kapton étant de l'ordre de quelques microns.

La phase critique pour le fonctionnement du tube est la plastification qui suit son déploiement.

Lors de cette plastification, le matériau subit un écoulement plastique qui tend à atténuer les plis et donc les amorces de flambage qu'ils constituent.

Le problème qui se pose du fait de la géométrie cylindrique du tube déployé est que, dans un cylindre pressurisé, la contrainte circonférentielle est double de la contrainte longitudinale. Aussi, afin d'atteindre la plastification longitudinale, il y a lieu d'exercer une forte pression dans le tube ce qui risque de rapprocher la contrainte circonférentielle exercée su le tube de sa contrainte de rupture. Pour éviter tout risque de rupture circonférentielle, le tube est renforcé par un bobinage circulaire 11 permettant au tube de plastifier longitudinalement sans risque d'éclatement.

La membrane 4 pour sa part est pliée en accordéon et logée dans le carter 10 à partir duquel elle se déploie sous l'action de la traction exercée par le mât ou tube 5 lors de son propre déploiement.

Le matériau choisi pour cette membrane ne nécessite pas de caractéristiques mécaniques particulièrement élevées en raison des faibles efforts qui lui sont appliqués.

Ce matériau devra néanmoins respecter les exigences suivantes:
compatibilité avec le pliage, résistance au stockage en orbite et tenue à l'environnement spatial et mécanique pour toute la durée de vie du satellite (jusqu'à 50 ans pour un satellite sur une orbite de 700 à 1000 km), dégazage conforme aux exigences spatiales, collabllité, masse surfacique inférieure à 100g/m², tenue au cyclage thermique et faible coût.

Le matériau constituant la voilure est avantageusement une membrane 4 et le matériau constituant la membrane un complexe multicouches comportant un treillis de renfort 18 noyé dans le complexe.

Ce complexe peut être notamment un assemblage comportant, de l'extérieur vers l'intérieur, deux couches externes 14 en film SiO₂ d'épaisseur de l'ordre de 1300 Angström, deux couches d'aluminium 15 de l'ordre de 1000 Angström englobant un film Kapton 16 de l'ordre de 12,5 microns et de l'ordre de 19 g/m², une couche d'adhésif polyester 17 de l'ordre de 12,5 microns et de l'ordre de 19 g/m² ainsi qu'un treillis de masse surfacique de l'ordre de 30 g/m² noyé dans la membrane pour contrer la propagation des déchirures dues aux impacts de poussières rencontrées en orbite.

Pour permettre un déploiement correct de la membrane 4, le carter comporte une ou plusieurs lames souples 8 qui permettent un dépliement en séquence de la membrane en commençant par déplier sa partie haute et en continuant le dépliage vers le bas.

Pour les géométries définies aux figures 2A et 3A, la voilure déployée est telle que sa section efficace reste, quelque soit la position du satellite sur sa trajectoire, dans un rapport compris entre 2,8 fois la surface de la projection du satellite perpendiculairement à sa trajectoire et environ 5 fois ladite surface de projection.

Les figures 2B et 3B représentent la surface de projection de la voilure selon les diverses positions angulaires du satellite sur sa trajectoire pour les dimensions données respectivement aux figures 2A et 2B.

L'invention ne se limite pas aux exemples décrits et notamment une autre possibilité pour la réalisation de la membranes est d'utiliser des matériaux à base de tissus de verre minéral tels que des treillis de verre noyés dans un film Teflon (marque enregistrée), le mât pouvant être pour sa part réalisé autrement que sous forme d'un tube gonflable.

En outre, l'invention s'applique à tout objet en orbite et notamment, par la terminologie satellite on englobe également des éléments de lanceurs ou de structures orbitales dont la désorbitation est souhaitée.

## Revendications

1. Voilure déployable (2, 3) d'aérofreinage de satellite (1), pour laquelle la voilure une fois déployée comprend au moins un élément de voilure formant une structure tridimensionnelle et comportant au moins deux panneaux (2a, 2b, 3a, 3b) s'étendant selon des plans sécants, formant un dièdre et se déployant à partir d'au moins un mât de déploiement (5), **caractérisé en ce que** les panneaux se rejoignent selon une arête commune (6, 7) constituée par un mât (5) de déploiement commun aux deux panneaux, au moins l'un des panneaux (2, 3) étant constitué d'une membrane souple (4) plane et tendue, une fois déployée, sur au moins deux côtés par des éléments de maintien (5, 8, 9) et pour laquelle le mât de déploiement constitue un élément de maintien complémentaire qui tend la membrane sur un troisième côté.

2. voilure déployable selon la revendication 1 **caractérisée en ce que** la voilure comporte au moins deux éléments de voilure disjoints (2, 3).

3. voilure déployable selon la revendication 2 **caractérisée en ce que** la voilure comporte au moins un premier élément de voilure (2) orienté parallèlement à un premier axe (a1) du satellite et un second élément de voilure (3) orienté parallèlement à un second axe (a2) du satellite, distinct du premier.

4. voilure déployable selon la revendication 3 **caractérisée en ce que** lesdits premier et second axes (a1, a2) sont des axes perpendiculaires.

5. voilure déployable selon la revendication 1 **caractérisée en ce que** les éléments de maintien comprennent un bras rigide (9), solidaire de la partie distale dudit mât (5) et maintenant la membrane (4) écartée du mât (5).

6. voilure déployable selon l'une des revendications précédentes **caractérisée en ce que** la membrane (4) est pliée dans un carter (10) et se déploie à partir de ce carter.

7. voilure déployable selon l'une quelconque des revendications précédentes **caractérisée en ce que** le mât (5) est un tube gonflable plié en accordéon avant déploiement.

8. voilure déployable selon la revendication 7 **caractérisée en ce que** le tube (5) est constitué par un laminé.

9. voilure déployable selon la revendication 8 **caractérisée en ce que** le laminé comporte une feuille aluminium et des feuilles de Kapton collées de chaque côté de la feuille d'aluminium.

10. voilure déployable selon la revendication 8 ou 9 **caractérisée en ce que** le laminé est renforcé par un bobinage circulaire (11).

11. voilure déployable selon l'une quelconque des revendications précédentes **caractérisée en ce que** le matériau constituant la membrane est un complexe multicouches comportant un treillis de renfort (18) noyé dans le complexe.

## Patentansprüche

1. Entfaltbarer Atmosphärenbremsflügel (2, 3) für Satelliten (1), bei dem der Flügel nach dem Entfalten mindestens ein Flügelelement umfasst, das eine dreidimensionale Struktur bildet und mindestens zwei Platten (2a, 2b, 3a, 3b) umfasst, die sich entlang von Schnittebenen erstrecken, einen Dieder bilden und sich von mindestens einem Entfaltungsmast (5) entfalten, **dadurch gekennzeichnet, dass** die Platten entlang einer gemeinsamen Kante (6, 7) zusammentreffen, die durch einen Entfaltungsmast (5) gebildet wird, der beiden Platten gemeinsam ist, wobei mindestens eine der Platten (2, 3) aus einer flexiblen ebenen Membran (4) besteht, die nach dem Entfalten an mindestens zwei Seiten durch Halteelemente (5, 8, 9) gespannt ist und für die der Entfaltungsmast ein ergänzendes Halteelement bildet, das die Membran an einer dritten Seite spannt.

2. Entfaltbarer Flügel nach Anspruch 1, **dadurch gekennzeichnet, dass** der Flügel mindestens zwei unverbundene Flügelelemente (2, 3) umfasst.

3. Entfaltbarer Flügel nach Anspruch 2, **dadurch gekennzeichnet, dass** der Flügel mindestens ein erstes Flügelelement (2), das parallel zu einer ersten Achse (a1) des Satelliten ausgerichtet ist, und ein zweites Flügelelement (3) umfasst, das parallel zu einer zweiten Achse (a2) des Satelliten ausgerichtet ist, die sich von der ersten unterscheidet.

4. Entfaltbarer Flügel nach Anspruch 3, **dadurch gekennzeichnet, dass** die erste und die zweite Achse (a1, a2) senkrechte Achsen sind.

5. Entfaltbarer Flügel nach Anspruch 1, **dadurch gekennzeichnet, dass** die Halteelemente einen starren Arm (9) umfassen, der mit dem distalen Teil des Mastes (5) fest verbunden ist und die Membran (4) vom Mast (5) weghält.

6. Entfaltbarer Flügel nach einem der vorstehenden Ansprüche, **dadurch gekennzeichnet, dass** die Membran (4) in einem Gehäuse (10) gefaltet ist und sich von diesem Gehäuse aus entfaltet.

7. Entfaltbarer Flügel nach einem der vorstehenden Ansprüche, **dadurch gekennzeichnet, dass** der Mast (5) ein aufblasbarer Schlauch ist, der vor dem Entfalten ziehharmonikaförmig gefaltet ist.

8. Entfaltbarer Flügel nach Anspruch 7, **dadurch gekennzeichnet, dass** der Schlauch (5) aus einem Laminat besteht.

9. Entfaltbarer Flügel nach Anspruch 8, **dadurch gekennzeichnet, dass** das Laminat eine Aluminiumfolie und Kaptonfolien umfasst, die auf jeder Seite der Aluminiumfolie verklebt sind.

10. Entfaltbarer Flügel nach Anspruch 8 oder 9, **dadurch gekennzeichnet, dass** das Laminat durch eine kreisförmige Wicklung (11) verstärkt ist.

11. Entfaltbarer Flügel nach einem der vorstehenden Ansprüche, **dadurch gekennzeichnet, dass** das die Membran bildende Material ein mehrschichtiger Komplex ist, der ein in den Komplex eingebettetes Verstärkungsgeflecht (18) umfasst.

## Claims

1. A deployable wing structure (2, 3) for air-braking a satellite (1) wherein, once deployed, the wing structure comprises at least one wing structure element that forms a three-dimensional structure and comprises at least two panels (2a, 2b, 3a, 3b) extending in secant planes and forming a dihedron, and deploys from at least one deployment mast (5), **characterised in that** the panels join along a common edge (6, 7) consisting of a deployment mast (5) common to the two panels, at least one of the panels (2, 3) consisting of a flexible, flat membrane (4) that is stretched, once deployed, on at least two sides by holding elements (5, 8, 9) and wherein the deployment mast consists of an additional holding element which stretches the membrane on a third side.

2. The deployable wing structure according to Claim 1, **characterised in that** the wing structure comprises at least two separated wing structure elements (2, 3).

3. The deployable wing structure according to Claim 2, **characterised in that** the wing structure comprises at least a first wing structure element (2) oriented parallel to a first axis (a1) of the satellite and a second wing structure element (3) orientated parallel to a second axis (a2) of the satellite, distinct from the first.

4. The deployable wing structure according to Claim 3 **characterised in that** said first and second axes (a1, a2) are perpendicular axes.

5. The deployable wing structure according to Claim 1 **characterised in that** the holding elements comprise a rigid arm (9), secured to the distal part of said mast (5) and holding the membrane (4) away from the mast (5).

6. The deployable wing structure according to any one of the preceding claims, **characterised in that** the membrane (4) is folded in a housing (10) and deploys from this housing.

7. The deployable wing structure according to any one of the preceding claims, **characterised in that** the mast (5) is an inflatable tube folded in the manner of an accordion before deployment.

8. The deployable wing structure according to Claim 7 **characterised in that** the tube (5) is formed by a laminate.

9. The deployable wing structure according to Claim 8 **characterised in that** the laminate comprises an aluminium sheet and sheets of Kapton glued to each side of the aluminium sheet.

10. The deployable wing structure according to Claim 8 or 9, **characterised in that** the laminate is reinforced by a circular winding (11).

11. The deployable wing structure according to any one of the preceding claims, **characterised in that** the material constituting the membrane is a multilayer complex comprising a reinforcement lattice (18) embedded in the complex.
